# EUROPÄISCHE PATENTSCHRIFT

(11) **EP 1 249 622 B1**
(45) Veröffentlichungstag und Bekanntmachung des Hinweises auf die Patenterteilung: **16.06.2004**
(21) Anmeldenummer: 02007988.5
(22) Anmeldetag: 10.04.2002
(51) Int. Cl.: F16B 7/04, F16B 7/18, B62D 33/04

(54) **Lösbare Verbindungstechnik**
Technique for releasably assembling elements
Technique pour l'assemblage réversible d'éléments

(30) Priorität: 14.04.2001 DE 10118535
(43) Veröffentlichungstag der Anmeldung: 16.10.2002
(73) Patentinhaber: Metz Aerials GmbH & Co KG, 76185 Karlsruhe (DE)
(72) Erfinder:
(74) Vertreter: Lempert, Jost, Dipl.-Phys. Dr. rer.nat.

(56) Entgegenhaltungen:
- EP-A- 0 806 338
- FR-A- 1 019 242
- FR-A- 2 166 549
- US-A- 2 905 283
- US-A- 5 683 198

## Beschreibung

Die Erfindung betrifft eine Verbindung mindestens zweier winklig zu einander auszurichtender Teile nach dem Oberbegriff des Anspruchs 1. Eine derartige Verbindung ist in der GB-A-2 173 626 dargestellt.

Die Erfindung bezieht sich insbesondere auf Profilverbindungen in der Kraftfahrtechnik, vor allem bei Funktionsfahrzeugen, wie Feuerwehr- oder sonstigen Sondereinsatzfahrzeugen. Soweit bei solchen Fahrzeugen ein Aufbau, beispielsweise das Podium eines Drehleiterfahrzeugs mittels Rahmenstrukturen gebildet wird, so werden die Rahmenelemente bisher in herkömmlicher Verbindungstechnik miteinander verbunden. Dies kann durch Schweißen geschehen. Hierdurch wird eine hinreichende feste Verbindung geschaffen. Bei einem Aufbau aus Aluminiumprofilen müssen in mühsamer Arbeit entsprechende Schnitte an den Profilen sowie Bohrungen erzeugt werden, durch welche letztere Schrauben zur Verbindung hindurch gesteckt werden. Derartige Verbindungen sind zwar gegenüber Schweißverbindungen lösbar, weisen aber nicht die erforderliche hohe Festigkeit auf. Außerdem sind sie nur mit erheblichem Aufwand und zweitaufwendiger Handarbeit herstellbar.

Die GB-A-2 173 626 zeigt eine Verbindung von zwei Platten mittels eines Spannelementes in zwei unter Zwischenlage der Platten durch eine Schraube gegeneinander verspannbaren Spannteilen. Nachteilig ist bei dem bekannten Gegenstand, dass bis auf formschlüssige Festlegung auf Zug lediglich reibschlüssige Festlegungen erfolgen. Insbesondere ist auch quer zur Erstreckungsrichtung der Rundrohre lediglich eine kraftschlüssige Verbindung gegeben, was nachteilig ist, das kraftschlüssige Verbindungen grundsätzlich weniger sicher als formschlüssige Verbindungen sind, da eine kraftschlüssige Verbindung auf der Reibung der gepressten Teile beurht und diese direkt oder indirekt durch die Vorspannkraft - hier - der Schraube erzeugt wird.

Der Erfindung liegt die Aufgabe zugrunde, eine lösbare Verbindung mindestens zweier winklig auszurichtender Teile zu schaffen, die - bei Lösbarkeit - eine hohe Sicherheit in möglichst vielen Einflussrichtungen und gegenüber Krafteinwirkungen gewährleistet. Diese Aufgabe ist durch die im Kennzeichen des Anspruchs 1 enthaltenen Merkmale gelöst.

In konkreter Ausgestaltung ist dabei vorgesehen, dass die Verspannung mittels einer Spanneinrichtung aus einer Schraube und einem Gegengewinde erfolgt, wobei entweder das Gegengewinde durch eine auf die Schraube aufschraubbare Schraubmutter gebildet ist oder das Gegengewinde durch Gewindebohrung im Winkelformelement oder im Gegenstück gebildet ist.

Ein Anliegend der unter- und/oder übergreifende Wandungen am Winkelformelement und/oder am Gegenstück kann insbesondere auch dadurch geschehen, dass das Winkelformelement auf seiner den Anlageflächen abgewandten Seite eine Formausbildung aufweist, die einer komplementären Ausbildung eines zu verbindenden dritten Teils entsprechen.

Eine weitere äußerst bevorzugte Ausgestaltung der Erfindung sieht vor, dass das dritte Teil ein sich winklig zur Erstreckungsrichtung der ersten beiden Teile erstreckendes Profil ist.

Durch die Erfindung wird in einfacher Weise mit wenigen Teilen eine stabile, aber lösbare Verbindung geschaffen, die weitgehend formschlüssig ausgebildet ist und die zu verbindenden Teile lediglich auf Zug kraftschlüssig hält.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnungen im einzelnen erläutert sind.

Dabei zeigt:
- Fig. 1: eine Darstellung zum Einsatz eines erfindungsgemäßen Strangprofils als Umlaufprofil zur Begrenzung eines Podiums einer Drehleiter;
- Fig. 2: eine perspektivische Explosionsdarstellung der wesentlichen lediglich schematisch wiedergegebenen Teile einer erfindungsgemäßen Verbindung;
- Fig. 3: die Schnittdarstellung eines bevorzugten Ausführungsbeispiels einer erfindungsgemäßen Verbindung;
- Fig. 4: eine schematische Darstellung einer erfindungsgemäßen Verbindung in perspektivischer Ansicht;
- Fig. 5: eine andere schematische Teildarstellung einer erfindungsgemäßen Verbindung mit L-Winkelprofil;
- Fig. 6: eine schematische Teildarstellung einer erfindungsgemäßen Verbindung mit mit Nut versehenem L-Winkelprofil;
- Fig. 7: eine weitere schematische Teildarstellung einer erfindungsgemäßen Verbindung mit einem U-Profil mit rückwärtiger Nut;
- Fig. 8: eine perspektivische Darstellung eines Formelements der erfindungsgemäßen Verbindung mit einem senkrecht verlaufenden, das Formelement beidseitig überragenden Teil;
- Fig. 9: eine perspektivische Darstellung eines Formelements der erfindungsgemäßen Verbindung entsprechend Fig. 8 mit einem einseitig mit dem Formelement bündig abschließenden senkrecht verlaufenden Profil;
- Fig. 10: eine Schnittdarstellung ähnlich der Fig. 3 durch eine erfindungsgemäße Verbindung von mit Querschnitt versehenen Profilen;
- Fig. 11: eine weitere erfindungsgemäße Verbindung von mit Querschnitt ausgeführten Profilen und
- Fig. 12: eine weitere Ausgestaltung einer erfindungsgemäßen Verbindung mit gleich ausgebildeten Profilen.

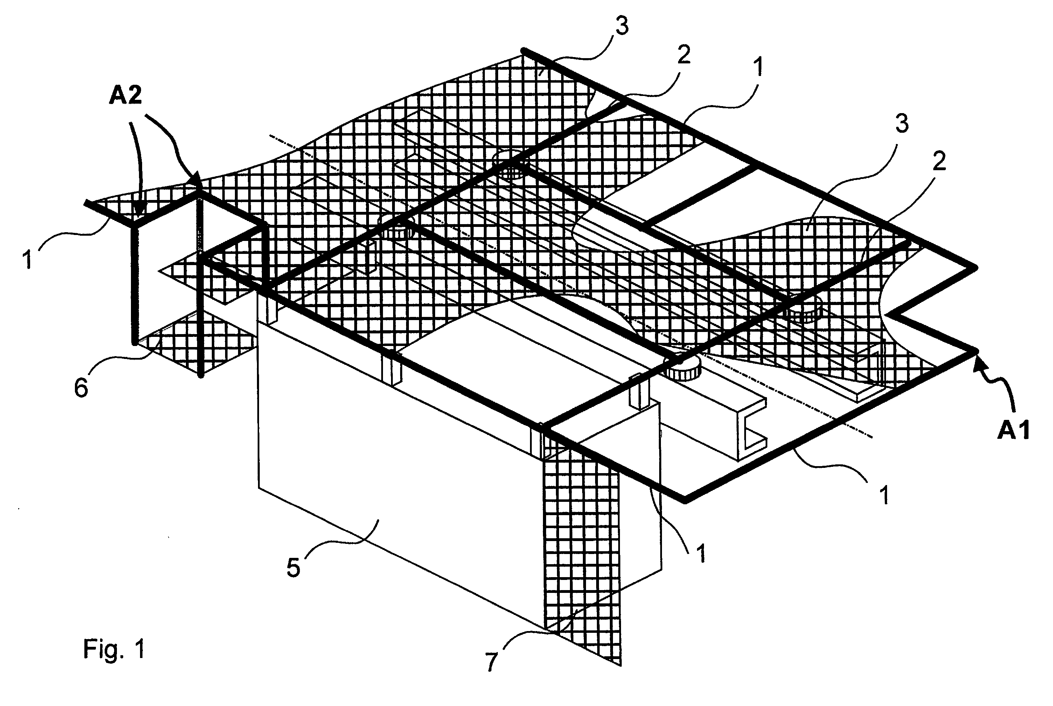

Die Fig. 1 zeigt in schematischer Darstellung die Form eines Podiums für eine Drehleiter an einem Drehleiter-Fahrzeug für die Feuerwehr. Tragende Elemente des Podiums selbst sind Profile, insbesondere Strangprofile, so ein äußeres umlaufendes Profil, das als Umlaufprofil 1 bezeichnet wird sowie innere Verbindungsprofile 2. Die begehbare Fläche des Podiums weist eine Profilstruktur auf, die beispielsweise durch auf ihrer Oberseite reliefartig strukturierte Blechplatten 3 erzeugt ist. Hierdurch wird eine stolperfreie und rutschhemmende begehbare Oberfläche des Podiums gebildet.

Unterhalb dieser Fläche können Zusatzelemente wie Gerätekästen 5, Aufstiege 6 und Verkleidungsblenden 7 angeordnet sein.

Die Profile 1,2 können in beliebiger Weise miteinander verbunden werden. Die Verbindung ist nicht Gegenstand der vorliegenden Anmeldung.

Gegenstand der vorliegenden Anmeldung ist ein Strangprofil 1 zur Bildung eines Umlaufprofils.

Bei A1 ist eine erfindungsgemäße Verbindung zur Verbindung zweier Profile in einer Ebene gegeben; bei A2 ist eine erfindungsgemäße Verbindung dreier Profile in Form eines Dreibeins gegeben.

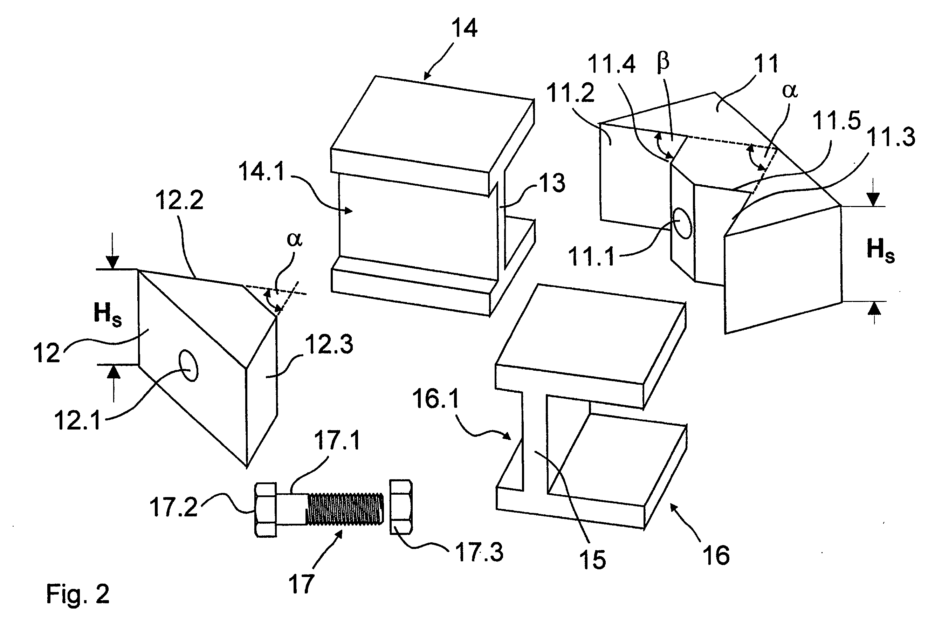

Die wesentlichen Elemente der erfindungsgemäßen Verbindung sind in der Fig. 2 in schematischer perspektivischer Explosionsdarstellung wiedergegeben.

Die erfindungsgemäße Verbindung weist ein Winkelformelement 11, ein Gegenstück 12, eine Wand 13 eines ersten zu verbindenden Teils 14, eine Wand 15 eines zweiten zu verbindenden Teils 16 und eine Spanneinrichtung 17 auf. Die Teile 14, 16 können abgesehen von der zur Bildung der erfindungsgemäßen Verbindung notwendigen Wand 13 bzw. 15 in verschiedenartigster Weise ausgebildet sein. Sie können Rechteckstäbe, Latten, Platten oder Bleche, offene Profile wie L-, T-, H-, U-Profile, oder dergleichen oder schließlich geschlossene (Strang-)Profile in Form von quadratischem oder rechteckigem Querschnitt, mit oder ohne Innensteg oder sonstige Sonderprofile sein. Dabei kann die Wand 13, 15 bei solchen geschlossenen Profilen ein innerer Innensteg oder aber eine äußere Wandung sein.

Im dargestellten Ausführungsbeispiel sind die Teile 14, 16 offene U-Profile mit einer rückwärtigen Nut 14.1 bzw. 16.1.

Die Spanneinrichtung 17 besteht im dargestellten Ausführungsbeispiel aus einer Maschinenschraube 17.1 mit einem Mehrkantkopf 17.2 und einer Schraubmutter 17.3. Statt der Schraubmutter 17.3 kann auch ein eingeschnittenes Gewinde in einer der Bohrungen 11.1 bzw. 12.1 des Winkelformelements 11 bzw. Gegenstücks 12 vorgesehen sein.

Kernelement der erfindungsgemäßen Verbindung ist das Winkelformelement 11. Es weist zwei Anlageflächen 11.2, 11.3 auf, die unter einem Winkel α zueinander ausgerichtet sind, der damit auch die Ausrichtung der Teile 14, 16 bestimmt.

Der Winkel α ist in der Regel ein rechteckiger Winkel (90°); er kann hiervon aber auch abweichen.

Am Winkelformelement 11 sind weiter jeweils unter einem endlichen Winkel zu den Anlageflächen 11.2, 11.3 ausgerichtete Widerlagerflächen 11.4, 11.5 vorgesehen. Der Winkel β zwischen Anlagefläche 11.2 bzw. 11.3 und zugeordneter Widerlagerfläche 11.4 bzw. 11.5 beträgt in der Regel ebenfalls 90°, kann aber hiervon abweichen. Zwischen den Widerlagerflächen 11.4, 11.5 ist im Winkelformelement 11 die schon erwähnte Bohrung 11.1 vorgesehen.

Das Gegenstück 12 weist zwei Spannflächen 12.2, 12.3 auf, die zueinander unter dem gleichen Winkel α ausgerichtet sind wie die Anlageflächen 11.2, 11.3 und mit diesen zusammenwirken.

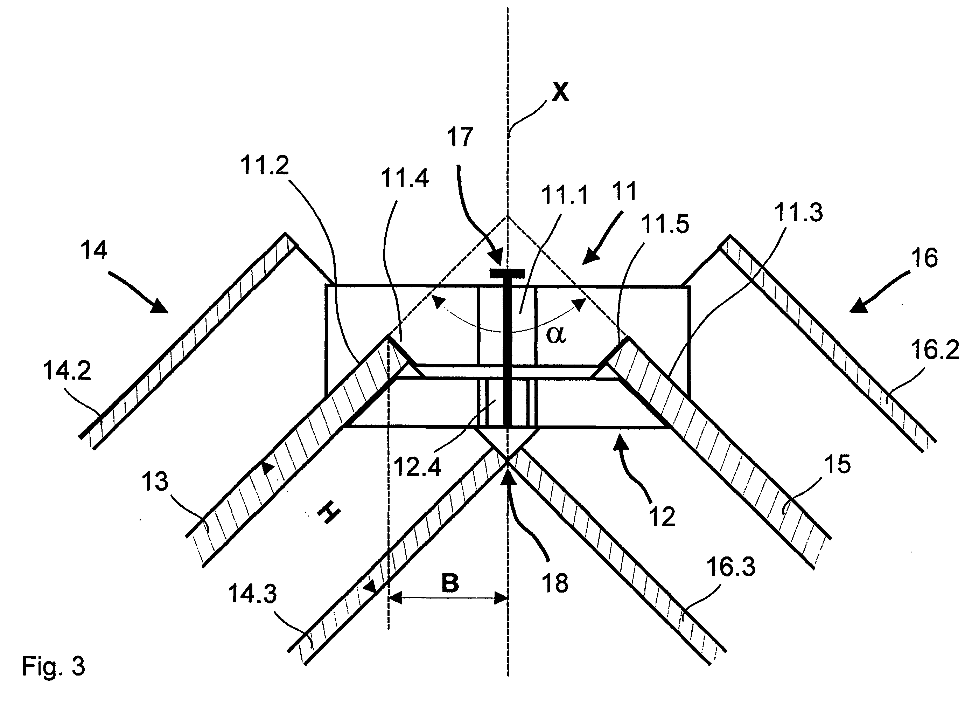

In der Fig. 3 ist nun eine erste bevorzugte Ausführungsform der erfindungsgemäßen Verbindung schematisch in ihrer geschlossenen, also Befestigungsstellung wiedergegeben. Die Teile 14, 16 sind geschlossene Profile, die geschnitten dargestellt sind. Die Wände 13, 15 bilden Stege der Profile 14, 16, von denen zusätzlich parallel zu den Wänden 13, 15 verlaufende Außenwände 14.2, 14.3 bzw. 16.2, 16.3 dargestellt sind. Die Spanneinrichtung 17 ist lediglich schematisch dargestellt. Sie ist durch eine Schraube 17.1 entsprechend der Fig. 2 mit einem in der Bohrung 12.1 des Gegenstücks 12 ausgebildeten eingeschnittenen Gewinde 12.4 gebildet.

Die Höhe H_{S} von Winkelformelement 11 und Gegenstück 12 (Fig. 2) stimmt in der Regel überein und entspricht bei einem geschlossenen Profil der inneren Höhe von Kammern der Teile 14, 16 senkrecht zur Zeichnungsebene der Fig. 3.

Die erfindungsgemäße Verbindung bildet damit bei der Ausgestaltung der Fig. 3 eine formschlüssige Verbindung in sämtlichen Koordinatenrichtungen bis auf den die Teile 14, 16 ausgeübten Zug; in dieser Richtung ist eine kraftschlüssige Verbindung gegeben.

Die Verbindung wird folgendermaßen hergestellt:

Zunächst werden Winkelformelement 11 und Gegenstück 12 durch die Spanneinrichtung 17 locker miteinander verbunden, indem die Schraube 17.1 lediglich von der der Anlageflächen 11.2, 11.3 abgewandten Seite des Winkelformelements 11 durch dieses hindurchgesteckt und das Gegenstück 12 lediglich soweit eingeschraubt wird, dass Winkelformelement 11 und Gegenstück 12 locker miteinander verbunden sind. Anschließend werden die Wände 13, 15 zwischen Anlagefläche 11.2 und Spannfläche 12.2 bzw. Anlagefläche 11.3 und Spannfläche 12.3 geschoben, bis sie an den Widerlagerflächen 11.4 und 11.5 zur Anlage kommen. Daraufhin wird die Verspannung durch weiteres Einschrauben der Schraube 17.1 in das Gewinde 12.4 des Gegenstücks 12 vorgenommen, bis eine hinreichend starke, auch kraftschlüssige Verspannung erreicht ist.

Im dargestellten Ausführungsbeispiel sind die Teile 14, 16 (Profile) einfach senkrecht zu ihrer Erstreckungsrichtung abgelenkt. Dies ist möglich, solange der Abstand B des Verbindungspunktes zwischen Anlagefläche 11.2 und zugeordneter Widerlagerfläche 11.4 von der Mittelachse X der Bohrungen 11.1, 12.1 und damit des Spannelements größer ist als der Abstand der äußeren Flächen der Wände 13, 15, jeweils von der inneren Begrenzungs- bzw. Außenwand 14.3, 16.3 des entsprechenden Teils 14, 16 multipliziert mit dem Kosinus des halben Ausrichtwinkels α, entsprechend also B>=H cos α/2. Damit die Teile 14, 16 an einer inneren Anlagekante 18 einander berühren, muss die Gleichheit bei der vorstehenden Beziehung gegeben sein. Im dargestellten Ausführungsbeispiel mit einem Winkel α von 90° beträgt für diesen Grenzfall der Abstand B=1√2H oder B=√½H.

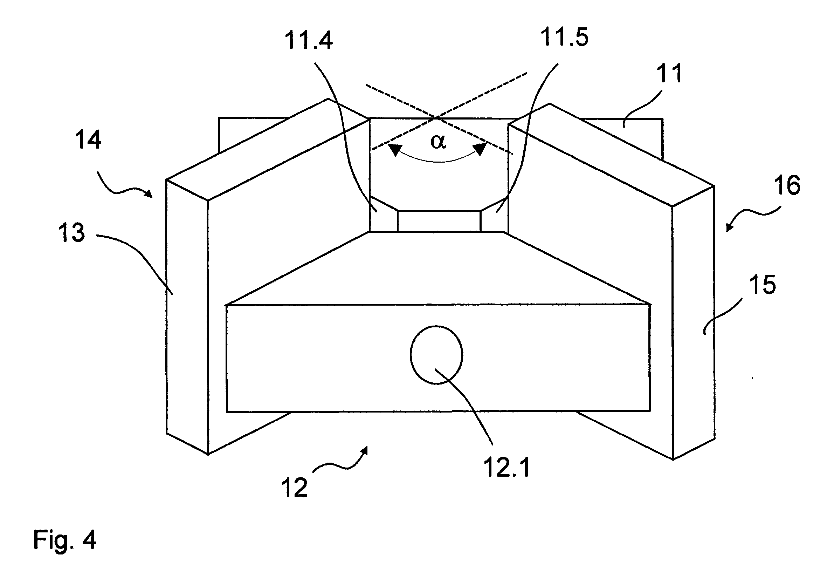

In der Fig. 4 sind schematisch in perspektivischer Darstellung die wesentlichen die erfindungsgemäße Verbindung bildenden Teile wiedergegeben. Die Bezugszeichen entsprechen denen der schon erörterten Figuren.

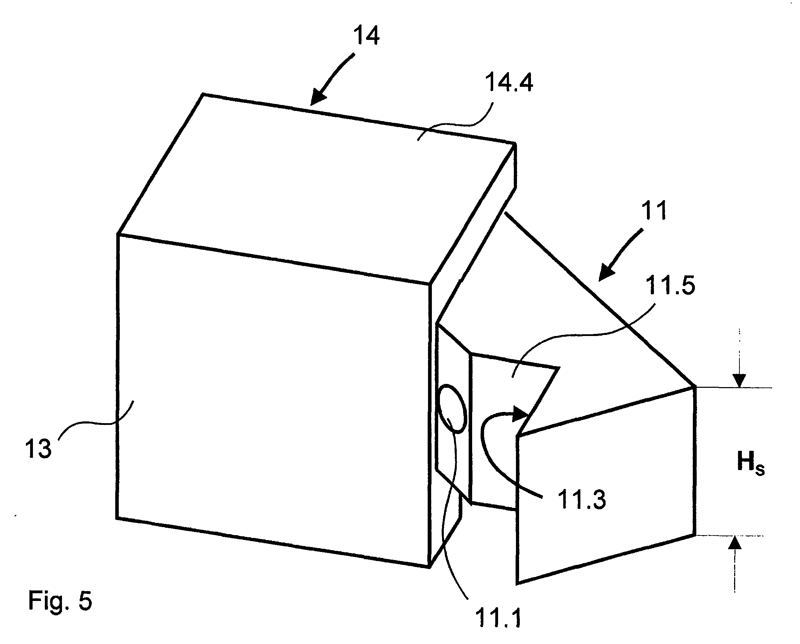

In der Fig. 5 ist die Anpassung eines Teils 14 in Form eines L-Winkelprofils am Winkelformelement 11 dargestellt. Die Wand 14.4 wird durch das Formwinkelelement 11 positioniert, so dass das Teil 14 selbst in Richtung der Höhe H_{S} des Formwinkelelements 11 formschlüssig positioniert ist. Entsprechendes gilt für das nicht dargestellte Teil 16. Hiermit ist die Möglichkeit einer genauen Ausrichtung der zu verbindenden Teile 14, 16 bzw. der L-Profile zueinander gegeben. Genauso wie die Positionierung in Längsrichtung der Teile 14, 16 ergibt sich damit die Möglichkeit einer eindeutigen Ausrichtung der Profile in Höhenrichtung H_{S} zueinander.

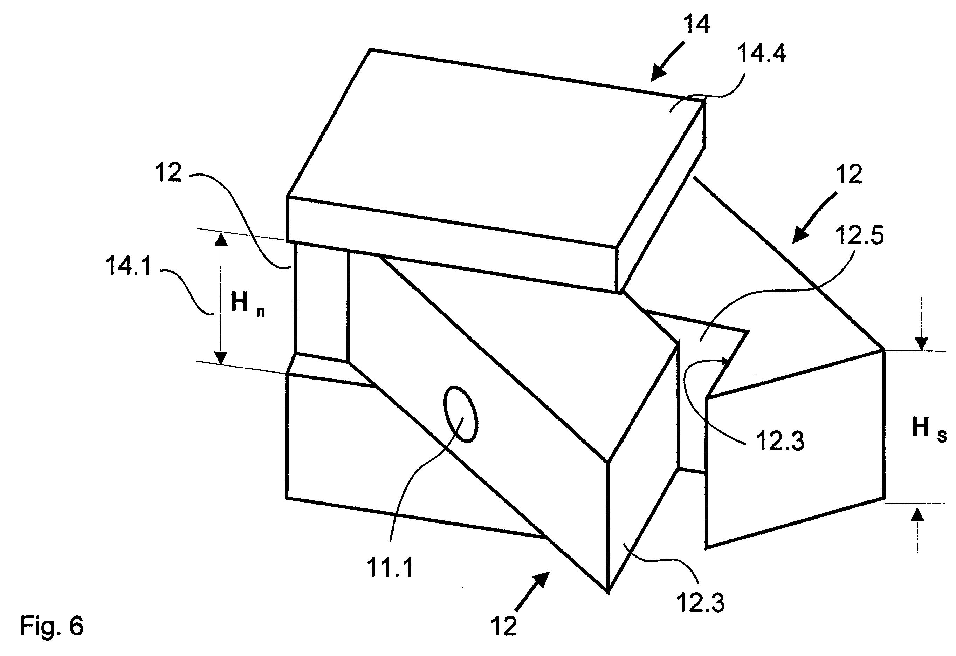

Die Fig. 6 zeigt ebenfalls die Verbindung von zwei L-Profilen, von denen das Teil 14 dargestellt ist, mittels der erfindungsgemäßen Verbindung. Hier ist wiederum, ebenso wie bei der Ausgestaltung der Fig. 2, rückwärtig eine Nut 14.1 vorgesehen, in die das Gegenstück 12 mit der gleichen Höhe H_{N} eingreift. Hierdurch wird ein Passsitz gebildet, der eine vertikale Positionierung der Teile 14, 16 (16 nicht dargestellt) zueinander durch den Sitz des Gegenstücks 12 in dieser Nut 14.1 (und der entsprechenden Nut 16.1) des Teils 16 ergibt.

Hierdurch wird eine Verbindung von zwei Teilen 14, 16 oder Profilen erzeugt, die in vertikaler Richtung (also entsprechend der Richtung der Höhe H_{S}) formschlüssig ist. Durch die Ausbildung der Nut mit dem zugehörigen Gegenstück 12 können Kräfte und Momente übertragen werden, die die Verbindungsgeometrie nicht beeinflussen. Die einachsige Längsrichtung der Teile 14, 16 - auf Zug - ist wiederum kraftschlüssig.

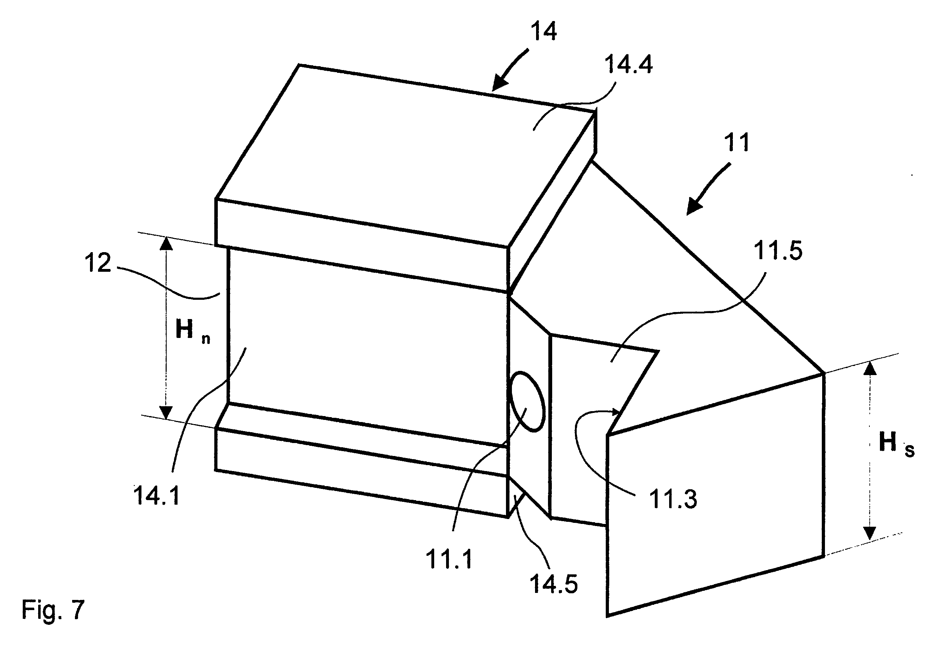

Die Fig. 7 zeigt noch einmal in einer perspektivischen schematischen Teildarstellung den Eingriff eines mit einer rückwärtigen Nut 14.1 versehenen U-Profils als Teil 14 des Winkelformelements 11.

Das - nicht dargestellte - Gegenstück 12 kann in die Nut 14.1 in gleicher Weise eingreifen, wie dies im Bezug auf die Fig. 6 beschrieben wurde, so dass insofern hinsichtlich der Ausrichtung der Teile 14 und 16 (16 nicht dargestellt) das vorstehend Gesagte gilt. Darüber hinaus weist ein U-Profil, wie es in der Fig. 7 dargestellt ist, zusätzlich zur oberen Deckwand 14.4 eine untere Deckwand 14.5 auf, die einen derartigen Abstand H_{P} aufweisen, der der Höhe H_{S} des Winkelformelements 11 entspricht und deren Verbindung zwischen den Wänden 14.4 und 14.5 einen Passsitz 11.6 am Winkelformelement 11 gibt. Die Teile 14, 16 oder Profile sind somit zueinander vertikal positionierbar (in Richtung der Höhen H_{P}, H_{S}) und gehen mit dem Winkelformelement 11 einen Formschluss ein. In Längsrichtung - auf Zug - ist die Verbindung wiederum kraftschlüssig. Der Übersichtlichkeit halber sind Gegenstück 12 und weiteres Teil 16 nicht dargestellt. Der Eingriff ist aber in den vorangegangenen Darstellungen erörtert; das gleiche gilt für die Verspannung mittels einer Spanneinrichtung 17.

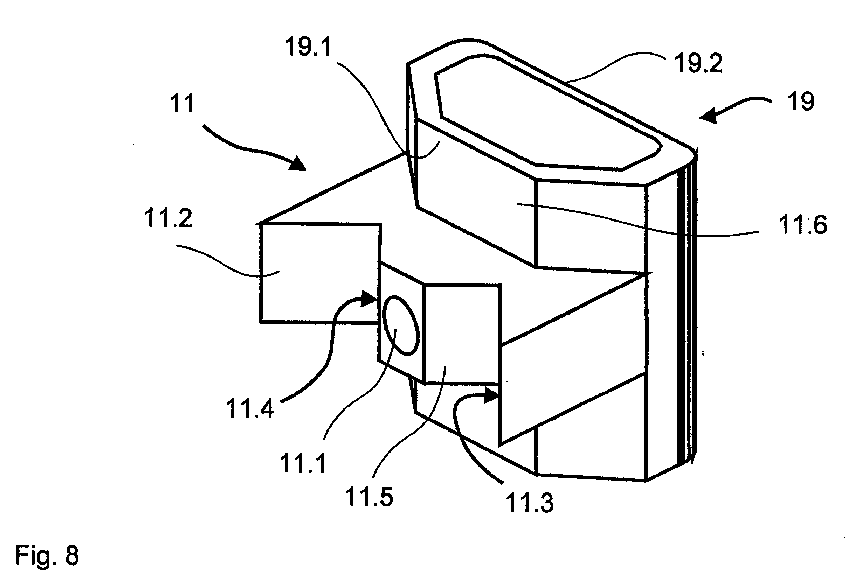

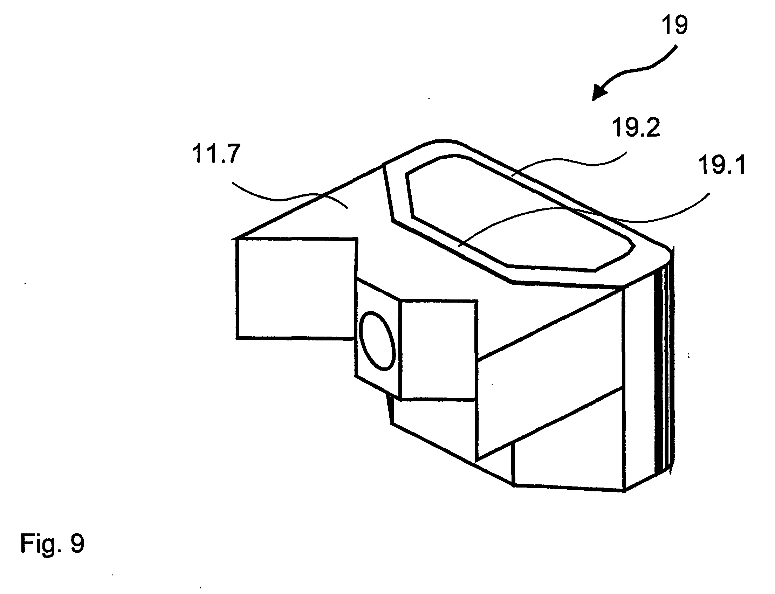

Die Erfindung spricht nicht nur von zwei winklig zueinander ausgerichteten Teilen 14, 16 oder Profilen, sondern entsprechend der Verbindung oder dem Knoten B. der Fig. 1 von einem dritten, ebenfalls winklig zu beiden Teilen 14, 16 verlaufenden Profilteil 19. Dieses Profilteil 19 kann in der aus den Fig. 8 und 9 ersichtlichen Weise geschaffen werden. Von der bisher erörterten Verbindung für zwei Teile 14, 16 ist lediglich das Winkelformelement 11 dargestellt. Die Verbindung der Teile 14, 16 mittels Gegenstück 12 und Spanneinrichtung 17 erfolgt in der schon beschriebenen Weise. Das Winkelformelement 11 ist bei der Ausgestaltung in den Fig. 8, 9 auf der den Anlageflächen 11.2 und den Widerlagerflächen 11.4, 11.5 abgewandten Seite mit einem Passsitz 11.6 für ein entsprechend komplementär ausgebildetes Profilteil 19 versehen, so dass in der durch die beiden nicht dargestellten Teile 14, 16 bestimmten Ebene auch insofern ein Formschluss erzeugt wird. Die Befestigung des Profilteils 19 kann mittels der Spanneinrichtung 17 erfolgen, wenn die Bohrung 11.1 (und die Bohrung 12.1 des Gegenstücks 12) ihre Fortsetzung durch mindestens eine Bohrung im Profilteil 19 und dessen Passwandung 19.1 findet. Eine solche Bohrung 11.1 in der Passwandung 19.1 kann als Gewindebohrung ausgebildet sein. In diesem Falle kann eine Schraube von der dem Winkelformelement 11 abgewandten Seite des Gegenstücks 12 in diese Gewindebohrung der Wandung 19.1 eingeschraubt werden. Wenn in der rückwärtigen Wand 19.2 eine weitere fluchtende Bohrung ist, so kann eine Schraube von dort her eingesteckt und ihr Widerlager gegebenenfalls in einer Gewindebohrung des Gegenstücks 12 entsprechend der Fig. 3 finden oder aber von der ein oder anderen Seite her eine Schraube hindurchgesteckt werden und an ihrem Schraubgewindeende mit einer Schraubmutter 17.3 (Fig. 2) zur Verspannung versehen werden.

Der Unterschied zwischen den beiden Ausgestaltungen der Fig. 8 und 9 ist, dass bei der Fig. 9 die Oberseite des Profilteils 19 mit der oberen Wandung 11.7 des Winkelformelements 11 abschließt und fluchtet, während bei der Ausgestaltung der Fig. 8 das Profilteil 19 die Oberseite 11.7 überragt und damit zu einem Rahmenaufbau beitragen kann.

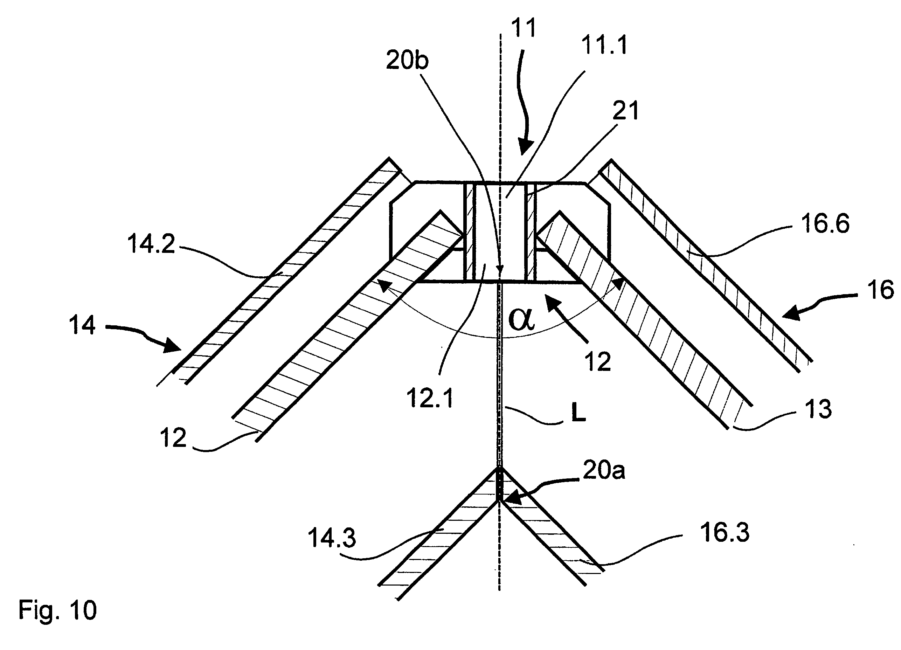

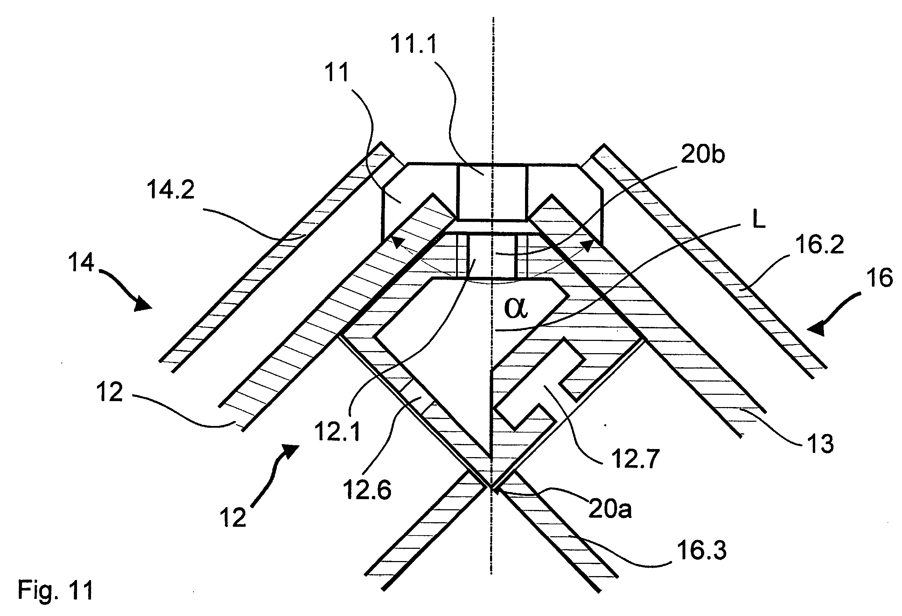

Die Fig. 10 und 11 zeigen Ausgestaltungen erfindungsgemäßer Verbindungen im Schnitt, bei denen das Verhältnis B/H < cos α/2, im konkreten Fall also <√½ ist. In diesem Fall ist den Teilen 14, 16 oder Profilen ein Gehrungsschnitt erforderlich, der durch eine Linie L zwischen Punkten 20a und 20b gegeben ist.

Weiterhin ist eine durch die Bohrungen 11.1, 12.1 hindurch erstreckende Passhülse 21 angedeutet, mittels der die Formelemente vorab gegenseitig ausgerichtet werden können; dies ist insbesondere sinnvoll, wenn nur eines derselben die Ausrichtung der Teile 14, 16 übernimmt.

Auch die Ausgestaltung der Fig. 11 zeigt Teile 14, 16 mit einem Gehrungsschnitt entlang der Linie L zwischen den Punkten 20a, 20b. Bei dieser Ausgestaltung ist das Gegenstück 12 selbst als Profil ausgebildet und kann sich, wie dies bei den Fig. 8 und 9 dargestellt ist, einseitig oder beidseitig über das Winkelformelement 11 hinaus erstrecken. Die Bohrung 12.1 ist als Gewindebohrung ausgebildet, so dass als weiteres Teil der Spanneinrichtung 17 lediglich eine Kopfschraube, die von der Seite des Winkelformelements 11 eingeschraubt wird, erforderlich ist. Das Gegenstück 12 kann an den seinen Spannflächen abgewandten Seiten weitere technische Elemente, wie eine Bohrung 12.6 oder eine hinterschnittene Nut 12.7 aufweisen.

Mit der Ausgestaltung der Fig. 11 wird eine lösbare Dreibein-Verbindung unter Minimierung der Teilezahl gebildet.

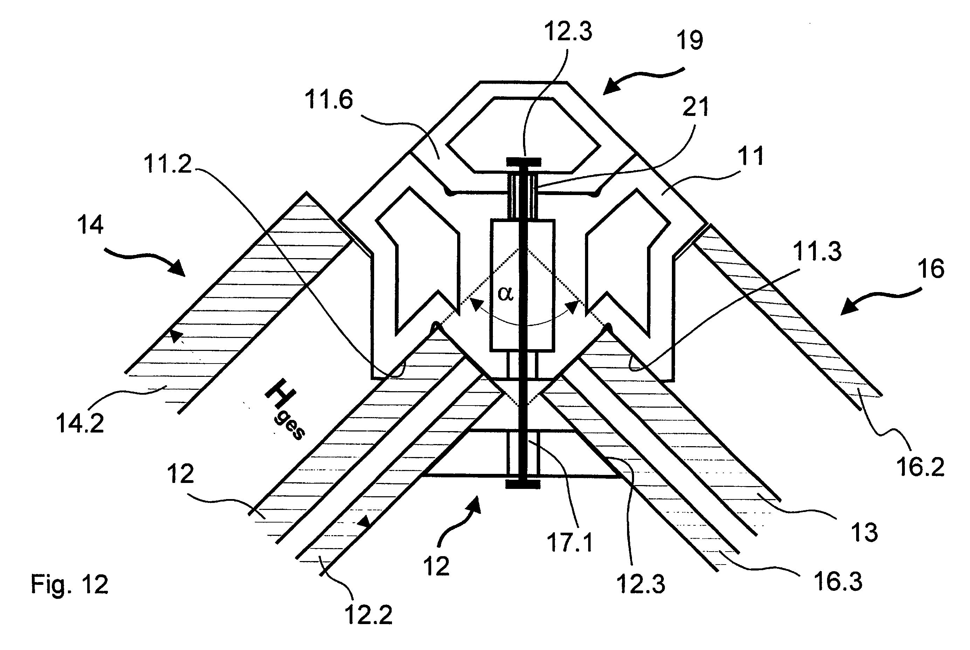

Die Fig. 12 zeigt eine Ausgestaltung, bei der das Gegenstück 12 außerhalb der als geschlossene Profile ausgebildeten Teile 14, 16 angeordnet ist.

Während hier die Wandungen 12, 13 an den Anlageflächen 11.2, 11.3 des Winkelformelements 11 anliegen, greifen die Spannflächen 12.2, 12.3 an der Außenseite der inneren Außenwände 14.3, 16.3 der Teile 14, 16 an.

Das Winkelformelement 11 weist weiter auf seiner dem Gegenstück 12 abgewandten Seite eine Passausnehmung 11.6 (entsprechend der Ausgestaltung der Fig. 8, 9) auf, in die ein drittes Profil 19 eingebettet werden kann, so dass auch hier ein Dreibein entsteht. Die vertikale Fixierung kann beispielsweise durch eine Passhülse 21 formschlüssig in den Bohrungen 11.1 und 12.1 von Winkelformelement 11 und Gegenstück 12 erfolgen. Die Spanneinrichtung 17 ist eine Schraubvorrichtung mit einer Schraube 17.1 und einer Schraubmutter 17.3, die, wenn das Profil 19 mit dem Winkelformelement 11 abschließt, von der Stirnseite desselben in dieses eingebracht werden kann. Hierdurch kann das gesamte Dreibein form- und kraftschlüssig verspannt werden. Die Profile und Elemente können in geeigneter Weise abgedeckt werden, beispielsweise durch Kunststoffkappen, aufgelegte Bleche oder dergleichen.

Die Querschnitte der Profile 14, 16 sind im dargestellten Ausführungsbeispiel bewusst unterschiedlich mit unterschiedlichen Gesamthöhen. Hierdurch sind verschiedene Übergangsmöglichkeiten zwischen Profil und Winkelformelement 11 möglich. Rechts bei dem Teil 16 ist eine ebene Variante, d.h. ein fluchtender Übergang der Außenseite des der Wandung 16.2 zum Winkelformelement 11 und dem anschließenden Profil 19 gegeben, während links zwischen der Außenwand 14.2 des Teils 14 einerseits und Winkelformelement 11 und Profil 19 andererseits eine Stufe gegeben ist, in die ein Verkleidungselement eingesetzt werden kann, so dass hierdurch eine ebene Abdeckung gebildet wird. Insgesamt wird ein optimaler Formschluss erzeugt.

### Bezugszeichenliste

- 1: Umlaufprofil
- 2: Verbindungsprofil
- 3: Blechplatten
- 4 5: Gerätekasten
- 6: Aufstieg
- 7: Verkleidungsblenden

- A1: ebene Verbindung
- A2: Dreibein-Verbindung

- 11: Winkelformelement
- 11.1: Bohrung
- 11.2: Anlagefläche
- 11.3: Anlagefläche
- 11.4: Widerlagerfläche
- 11.5: Widerlagerfläche
- 11.6: Passsitz
- 11.7: obere Wandung

- 12: Gegenstück
- 12.1: Bohrung
- 12.2: Spannfläche
- 12.3: Spannfläche
- 12.4: Gewinde
- 12.6: Bohrung
- 12.7: hinterschnittene Nut

- 13: Wand

- 14: erstes Teil
- 14.1: rückwärtige Nut
- 14.2: Außenwand
- 14.3: Außenwand
- 14.4: obere Deckwand
- 14.5: untere Deckwand

- 15: Wand

- 16: zweites Teil
- 16.1: rückwärtige Nut
- 16.2: Außenwand
- 16.3: Außenwand

- 17: Spanneinrichtung
- 17.1: Schraube
- 17.2: Mehrkantkopf
- 17.3: Schraubmutter

- 18: Anlagenkante

- 19: drittel Teil (Profil)
- 19.1: Passwandung
- 19.2: rückwärtige Wand

- 20a: Punkte
- 20b: Punkte
- 21: Passhülse

- α: Winkel
- β: Winkel

- H_{S}: Höhe des Winkelformelements
- H_{N}: Höhe der Nut
- H_{P}: Abstand von oberer/unterer Deckwand

- A: Abstand
- B: Abstand
- L: Linie
- X: Mittelachse

## Patentansprüche

1. Verbindung mindestens zweier winklig zu einander auszurichtender Teile (14, 16), von denen jedes eine einspannbare Wand (13, 15) mit einer Stirnseite aufweist, mit einem Winkelformelement (11) mit zwei unter dem gewünschten Winkel (α) ausgerichteten Anlageflächen (11.2, 11.3) und Widerlagerflächen (11.4, 11.5) für die Stirnseiten der Teile (14, 16), wobei die Anlageflächen (11.2, 11.3) und Widerlagerflächen (11.4, 11.5) winklig zueinander ausgerichtet sind und mit einem Gegenstück (12) zum Winkelformelement (11) mit unter dem gleichen Winkel (α) wie die Anlageflächen (11.2, 11.3) verlaufende Spannflächen (12.2, 12.3), wobei das Gegenstück (12) unter Zwischenlage der spannbare Wände (13, 15) beider winklig zu einander auszurichtenden Teile (14, 16) gegen das Winkelformelement (11) verspannbar ist und die Spannkraft der Wände (13, 15) gegen die Anlageflächen (11.2, 11.3) und die Widerlagerflächen (11.4, 11.5) wirkende Kraftkomponenten aufweist, **dadurch gekennzeichnet, dass** die Teile (14, 16), das Winkelformelement (11) und/oder das Gegenstück (12) über- und/oder untergreifende Wandungen (14.4, 14.5) aufweisen und dass die unter- und/oder übergreifende Wandungen (14.4, 14.5) am Winkelformelement (11) bzw. dem Gegenstück (12) anliegen.

2. Verbindung nach Anspruch 1, **dadurch gekennzeichnet, dass** die Verspannung mittels einer Spanneinrichtung (17) aus einer Schraube (17.1) und einem Gegengewinde erfolgt.

3. Verbindung nach Anspruch 2, **dadurch gekennzeichnet, dass** das Gegengewinde durch eine auf die Schraube (17.1) aufschraubbare Schraubmutter (17.3) gebildet ist.

4. Verbindung nach Anspruch 3, **dadurch gekennzeichnet, dass** das Gegengewinde durch eine Gewindebohrung im Winkelformelement (11) oder im Gegenstück (12) gebildet ist.

5. Verbindung nach einem der vorangehenden Ansprüche, **dadurch gekennzeichnet, dass** das Gegenstück (12) und/oder Winkelformelement (11) in an den Teilen (14, 16) ausgebildeten Nuten eingreifen.

6. Verbindung nach einem der vorangehenden Ansprüche, **dadurch gekennzeichnet, dass** das Winkelformelement (11) auf seiner den Anlageflächen (11.2, 11.3) abgewandten Seite eine Formausbildung (Passsitz 11.6) aufweist, die einer komplementären Ausbildung eines zu verbindenden dritten Teils (19) entsprechen.

7. Verbindung nach Anspruch 6, **dadurch gekennzeichnet, dass** das dritte Teil (19) ein sich winklig zur Erstreckungsrichtung der ersten beiden Teile (14, 16) erstreckendes Profil ist.

8. Verbindung nach Anspruch 6 oder 7, **dadurch gekennzeichnet, dass** das dritte Teil (19) mittels der Spanneinrichtung (17) mit Winkelformelement (11) in den beiden ersten Teilen (14, 16) verbindbar ist.

## Claims

1. Connection between at least two parts (14, 16) to be oriented at an angle to one another and whereof each has a fixable wall (13, 15) with a face, with an angular shaping element (11) with two bearing surfaces (11.2, 11.3) oriented by the desired angle (α) and abutment surfaces (11.4, 11.5) for the faces of parts (14, 16), the bearing surfaces (11.2, 11.3) and abutment surfaces (11.4, 11.5) are oriented at an angle to one another and with a counterpart (12) to the angular shaping element (11) with clamping surfaces (12.2, 12.3) which are under the same angle (α) as the bearing surfaces (11.2, 11.3), the counterpart (12) being braceable against the angular shaping element (11), accompanied by the interposing of clampable walls (13, 15) of both parts (14, 16) to be oriented at an angle to one another and the clamping force of the walls (13, 15) has force components acting against the bearing surfaces (11,2, 11.3) and abutment surfaces (11.4, 11.5),
**characterized in that** the parts (14, 16), angular shaping element (11) and/or counterpart (12) have over-engaging and/or under-engaging walls (14.4, 14.5) engaging on the angular shaping element (11) or the counterpart (12).

2. Connection according to claim 1, **characterized in that** bracing takes place by means of a clamping device (17) formed by a screw (17.1) and a counterthread.

3. Connection according to claim 2, **characterized in that** the counterthread is formed by a lock nut (17.3), which can be screwed onto screw (17.1).

4. Connection according to claim 3, **characterized in that** the counterthread is formed by a tapped hole in the angular shaping element (11) or in counterpart (12).

5. Connection according to one of the preceding claims, **characterized in that** the counterpart (12) and/or angular shaping element (11) engages in grooves formed on parts (14, 16).

6. Connection according to one of the preceding claims, **characterized in that** on its side remote from the bearing surfaces (11.2, 11.3), the angular shaping element (11) has a shaped construction (press fit 11.6), which corresponds to a complimentary construction of a third part (19) to be connected.

7. Connection according to claim 6, **characterized in that** the third part (19) has a profile extending at an angle to the extension direction of the first two parts (14, 16).

8. Connection according to claim 6 or 7, **characterized in that** the third part (19) can be connected by the clamping device (17) with the angular shaping element (11) in the two first parts (14, 16).

## Revendications

1. Assemblage d'au moins deux pièces (14,16) à orienter angulairement entre elles, dont chacune présente une paroi d'enserrement (13,15) avec une face frontale, à assembler avec un élément d'angle (11) présentant deux surfaces d'appui (11.2, 11.3) orientées selon l'angle désiré (α) et deux surfaces de butée (11.4, 11.5) pour les faces frontales des pièces (14,16), les surfaces d'appui (11.2, 111.3) et les surfaces de butée (11.4, 11.5) étant orientées angulairement entre elles, et avec une contre-pièce (12) par rapport à l'élément d'angle (11) présentant des surfaces d'ablocage (12.2, 12.3) s'étendant selon le même angle (α) que les surfaces de butée (11.4, 11.5), dans lequel la contre-pièce (12) peut être enserrée contre l'élément d'angle (11) par interposition des parois d'enserrement (13, 15) des deux pièces (14,16) à orienter angulairement entre elles, et la force de serrage des parois (13,15) présente des composantes agissant contre les surfaces d'appui (11.2, 11.3) et les surfaces de butée (11.4, 11.5), **caractérisé en ce que** les pièces (14, 16), l'élément d'angle (11) et/ou la contre-pièce (12) présentent des parois (14.4, 14.5) en chevauchement par le dessus et/ou par le dessous et **en ce que** les parois (14.4, 14.5) en chevauchement par le dessous et/ou par le dessus viennent en contact avec l'élément d'angle (11) ou la contre-pièce (12).

2. Assemblage selon la revendication 1, **caractérisé en ce que** l'enserrement est réalisé au moyen d'un dispositif de serrage (17) consistant en une vis (17.1) et un contre-filetage.

3. Assemblage selon la revendication 2, **caractérisé en ce que** le contre-filetage est constitué par un écrou (17.3) pouvant être vissé sur la vis (17.1).

4. Assemblage selon la revendication 3, **caractérisé en ce que** le contre-filetage est constitué par un perçage taraudé dans l'élément d'angle (11) ou dans la contre-pièce (12).

5. Assemblage selon l'une quelconque des revendications précédentes, **caractérisé en ce que** la contre-pièce (12) et/ou l'élément d'angle (11) s'engagent dans des rainures conformées dans les pièces (14, 16).

6. Assemblage selon l'une quelconque des revendications précédentes, **caractérisé en ce que** l'élément d'angle (11) présente sur sa face opposée aux surfaces d'appui (11.2, 11.3) une conformation (surface ajustée de portée 11.6) qui correspond à une conformation complémentaire d'une troisième pièce (19) à assembler.

7. Assemblage selon la revendication 6, **caractérisé en ce que** la troisième pièce (19) est un profilé s'étendant angulairement par rapport à la direction d'extension des deux autres pièces (14, 16).

8. Assemblage selon la revendication 6 ou 7, **caractérisé en ce que** la troisième pièce (19) peut être assemblée au moyen du dispositif de serrage (17) avec l'élément d'angle (11) dans les deux premières pièces (14,16).
